Europäisches Patentamt

European Patent Office

Office européen des brevets

(11) Veröffentlichungsnummer: **0 357 828**
**A1**

## (12) EUROPÄISCHE PATENTANMELDUNG

(21) Anmeldenummer: 88114727.6

(22) Anmeldetag: 09.09.88

(51) Int. Cl.5: **B65G 57/081** , **B65G 57/18**

(43) Veröffentlichungstag der Anmeldung:
**14.03.90 Patentblatt 90/11**

(84) Benannte Vertragsstaaten:
**AT BE CH DE ES FR GB GR IT LI LU NL SE**

(71) Anmelder: **FRIEDRICH VON HEIN GMBH**
**Carl-Benz-Strasse 19**
**D-6830 Schwetzingen(DE)**

(72) Erfinder: **von Hein, Friedrich Dipl.-Ing.,**
**Am Waldrand 38,**
**D-6800 Mannheim 81,(DE)**

(74) Vertreter: **Ratzel, Gerhard, Dr.**
**Seckenheimer Strasse 36a**
**D-6800 Mannheim 1(DE)**

(54) Verfahren und Vorrichtung zum Palettieren.

(57) Die Erfindung betrifft ein Verfahren und eine Vorrichtung zur Durchführung des Verfahrens zum Palettieren von Muffenrohren, Flanschrohren und gleichartigen Erzeugnissen, die eine gegensinnig angeordnete Palettierung erfordern, wobei das Palettiergut (1) einzeln aus einer Fertigungseinheit (2) in eine Empfangseinheit (3) übernommen wird, einer Hebe- und Schwenkeinheit (6) zugeführt wird, die das einzelne Palettiergut (1), wechselweise um 180° gewendet, einer Vorpalettierung (8) übergibt und nach der Palettierung einer Stapellage, dieser einer Endpalette (12) zuführt.

Fig. 19

EP 0 357 828 A1

## Verfahren und Vorrichtung zum Palettieren

Die Erfindung betrifft ein Verfahren und eine Vorrichtung zum Palettieren von Muffenrohren, Flanschrohren und gleichartigen Erzeugnissen, die eine gegensinnig angeordnete Palettierung erfordern.

Muffenrohre, Flanschrohre oder gleichartige Erzeugnisse müssen zur Lagerung und zum Transport gestapelt werden. Hierbei tritt das Problem auf, daß diese Erzeugnisse derart gestapelt werden müssen, daß die Rohrmuffen in beliebiger und verschiedensten Mustern zueinander wechselweise sowie axial versetzt zugeordnet werden. Dies ist erforderlich um keine Schrägstapelung sondern eine kompakte Stapelung zu erhalten.

Das Stapeln von solchen Produkten nennt man Rohrbündelung oder Palettierung. Diese Palettierung wird in herkömmlicherweise manuell durchgeführt. D. h. es sind keine Vorrichtungen bekannt, die eine automatische gegensinnige Palettierung durchführen können.

Der Erfindung liegt daher die Aufgabe zugrunde, ein Verfahren zu entwickeln und eine Vorrichtung zur Durchführung eines solchen Verfahrens bereit zustellen, womit ermöglicht wird, Muffenrohre, Flanschrohre und gleichartige Erzeugnisse gegensinnig automatisch und maschinell zu palettieren.

Diese Aufgabe wird erfindungsgemäß dadurch gelöst, daß das Verfahren der eingangs genannten Gattung dadurch gekennzeichnet ist, daß das Palettiergut einzeln aus einer Fertigungseinheit in eine Empfangseinheit übernommen wird, einer Hebe- und Schwenkeinheit zugeführt wird, die das einzelne Palettiergut wechselweise um 180° wendet, einer Vorpalettierung übergibt und nach der Palettierung einer Stapellage diese einer Endpalette zuführt.

Weitere Erfindungsmerkmale sind in den Ansprüchen 2 bis 6 gekennzeichnet.

Ferner besteht die Aufgabe der Erfindung darin, eine Vorrichtung zur Durchführung des Verfahrens bereitzustellen, die dadurch gekennzeichnet ist, daß sie aus einer Empfangseinheit, einer an einer Maschinensäule angeordneten und senkrecht verfahrbaren Hebe- und Schwenkeinheit mit Kipphebeln, einer an der Maschinensäule senkrecht verfahrbar angeordneten Vorpalettierung und pneumatischen und/oder hydraulischen und/oder elektrischen Steuereinheiten besteht.

Besondere Erfindungsmerkmale der Vorrichtung sind in den Ansprüchen 8 bis 10 gekennzeichnet.

Anhand der beigefügten Zeichnungen, die ein besonders bevorzugtes Ausführungsbeispiel der Erfindung zeigen, wird diese nun näher erläutert.

Dabei zeigen:

Figur 1 eine Draufsicht der Vorrichtung und

Figur 2 einen Schnitt entlang der in Figur 1 angedeuteten Linie A - B;

Figur 3 bis Figur 19 die einzelnen Verfahrensschritte.

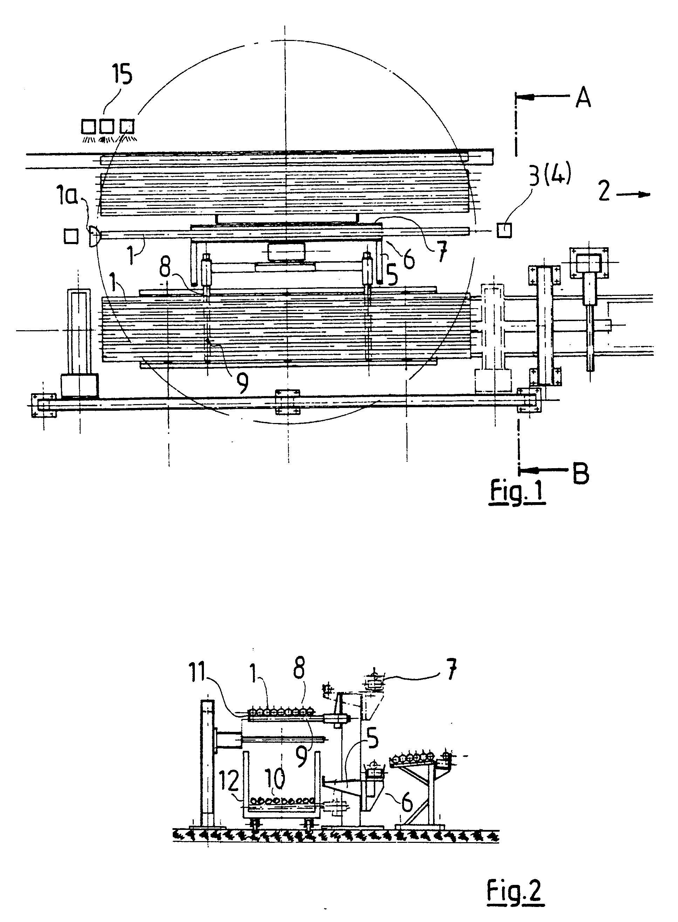

Die Figuren 1 und 2 zeigen die erfindungsgemäße Vorrichtung.

Sie besteht im wesentlichen aus einer Empfangseinheit 3, aus einer Hebe- und Schwenkeinheit 6 mit Kipphebel 5 und einer Vorpalettiereinheit 8.

Aus einer Fertigungseinheit 2, dies kann eine Extruderanlage, eine Säge oder aber auch ein Pufferlager sein, läuft das Palettiergut 1, in diesem Ausführungsbeispiel ein Muffenrohr, auf die Empfangseinheit 3. Die Empfangseinheit 3 weist zum Transportieren des Palettiergutes 1 mindestens eine Förderrolle 4 auf. In diesem Ausführungsbeispiel besteht die Empfangseinheit 3 aus einer Aufnahmerolle und einer Auslaufrolle, die jeweils an den Enden der Auflagerinne 7 angeordnet sind. Die Förderrollen 4 dienen der Zuführung des Palettiergutes 1 zu der Hebe- und Schwenkeinheit 6. Diese können jedoch auch als Förderbänder oder ähnliche Transporteinheiten ausgebildet sein. Je nach Palettiergut ist es auch erforderlich, die Auflagerinne mit innenliegenden Fördereinheiten, wie z. B. Rollen oder Bändern auszustatten.

Besonderes Merkmal der Erfindung ist es, daß im Bereich der Auflagerinne 7 eine Endlagenerkennung 15 angeordnet ist. Da beim wechselseitigen Palettieren das Palettiergut stets längsversetzt auf die Auflagerinne aufgelegt werden muß, d.h. die Endlage der Muffe 1a auf der Auflagerinne 7, muß variabel gestaltbar sein, ist diese Endlagenerkennung 15 von großer Wichtigkeit. Sie kann z. B. aus mehreren Lichtschranken bestehen.

Nachdem sich das Muffenrohr 1 in der Endlage auf der Auflagerinne 7 befindet, verfährt die Hebe- und Schwenkeinheit 6 mit den Kipphebeln 5 senkrecht nach oben. Je nach Erfordernis und je nach der Befehlsebene im Programm wird das Muffenrohr 1 in dieser Lage auf die Vorpalettierung abgegeben oder aber zuvor um 180° geschwenkt. Dies erfolgt durch die drehbare Anordnung der Hebe- und Schwenkeinheit 6. Zum Ablegen des Muffenrohrs 1 in die Vorpalettierung 8 werden die Kipphebel 5 in waagrechte Stellung geschwenkt, die Auflagerinne 7 kippt seitlich ab und das Muffenrohr 1 rollt auf die waagrecht stehenden Kipphebel 5. Danach fährt die Hebe- und Schwenkeinheit 6 mit den Kipphebeln 5 senkrecht ab und legt dabei das Muffenrohr 1 in die Auffangarme 9 der Vorpalettiereinheit 8.

Die Auffangarme 9 weisen hierbei eine geringe Neigung auf, damit die abgelegten Rohre 1 nach hinten zu den Schwenkhebeln 11 rollen können. Diese Schwenkhebel 11 stehen zunächst senkrecht und bilden einen Anschlag für die Rohre 1.

Kurz bevor die Hebe- und Schwenkeinheit 6 die unterste Position erreicht hat, werden die Kipp hebel 5 wieder in senkrechte Stellung versetzt. Hiernach wiederholt sich der bereits beschriebene Vorgang, wobei die Hebe- und Schwenkeinrichtung 6 das Palettiergut stets wechselweise in die Vorpalettierung ablegt.

Sobald die Vorpalettierung 8 mit einer kompletten Stapellage 10 belegt ist, fährt diese senkrecht ab, die Schwenkhebel 11 werden in waagrechte Stellung gekippt und die Auffangarme 9 werden eingezogen.
Somit werden die Rohre 1 bzw. die Stapellage 10 in der bereitstehenden Endpalette 12 abgelegt.

Anhand den nachfolgenden Figuren 1 bis 19 werden die einzelnen Verfahrensschritte in schematischer Darstellung nochmals erläutert.

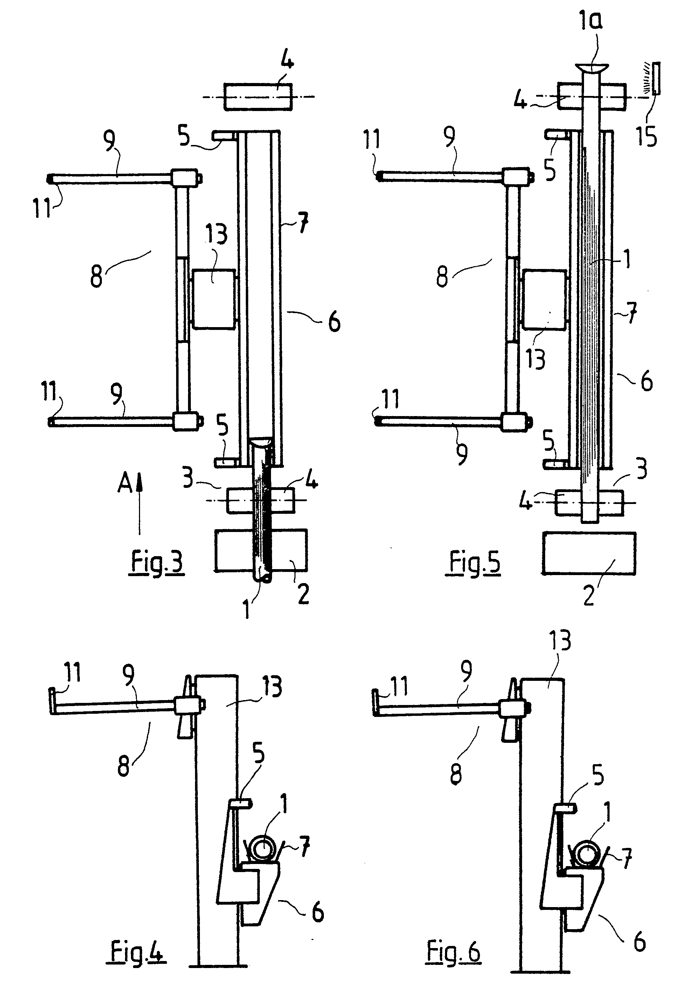

Figur 3 zeigt das aus der Fertigungseinheit 2 ankommende Muffenrohr 1, das über die Förderrolle 4 der Empfangseinheit 3 der Auflagerinne 7 zugeführt wird.

Die Figur 4 zeigt eine Ansicht aus der in Figur 3 angedeuteten Richtung A und verdeutlicht die Stellung der einzelnen Elemente in diesem Verfahrensschritt.

Die Hebe- und Schwenkeinrichtung 6 befindet sich in unterster Position. Die Auflagerinne 7 steht senkrecht, ebenso die Kipphebel 5. Die Vorpalettierung 8 befindet sich in oberster Position, die Schwenkhebel 11 stehen senkrecht.

Die Figuren 5 und 6 zeigen das Muffenrohr 1 nachdem es sich in der Endlage auf der Auflagerinne 7 befindet. Die Endlagenerkennung 15 hat hierbei diese Position erkannt und die Förderrollen 4 gestoppt.

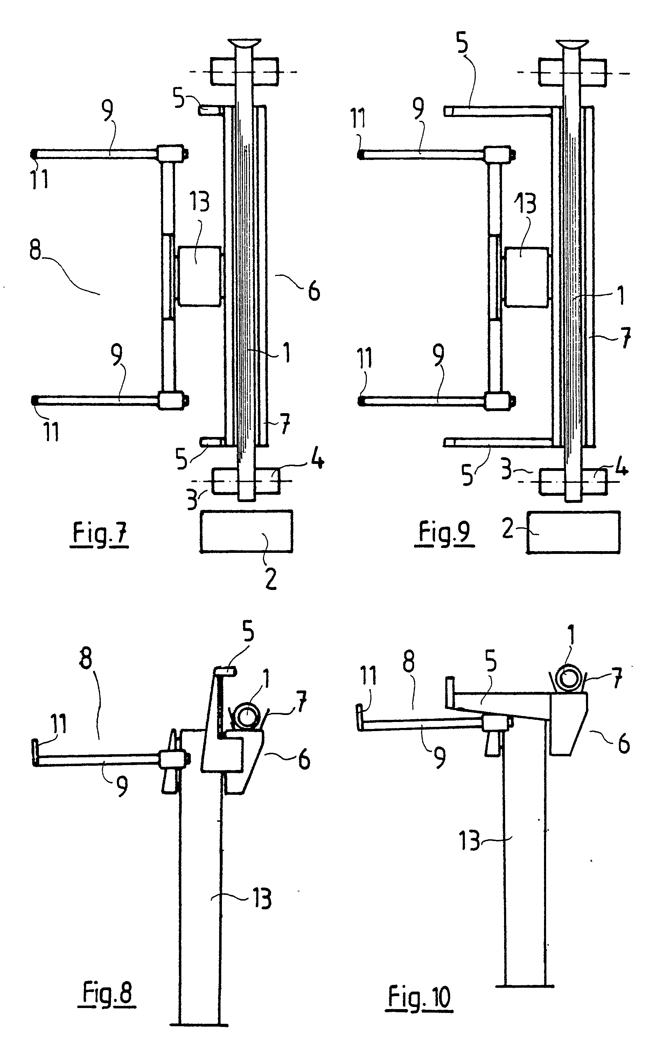

Figur 7 und 8 zeigen die Aufwärtsbewegung der Hebe- und Schwenkeinrichtung 6. Das Palettiergut 1 wurde mit der Auflagerinne 7 der Hebe- und Schwenkeinheit 6 in die oberste Position versetzt.

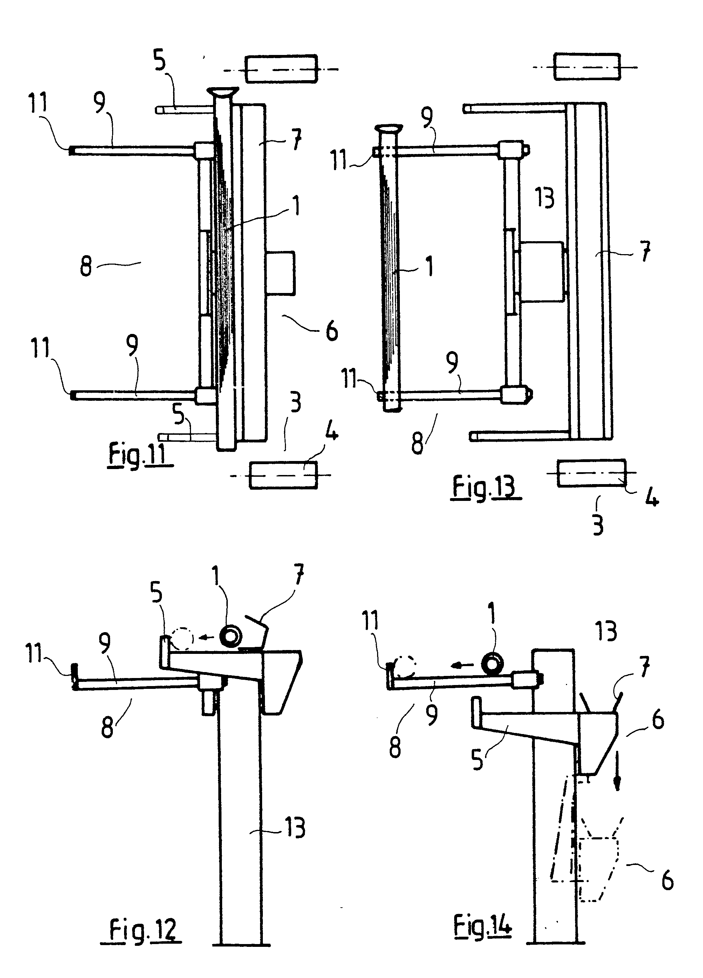

Da es sich zunächst um das erste Muffenrohr 1 handelt, muß keine Drehbewegung der Hebe- und Schwenkeinheit 6 erfolgen, sondern das Muffenrohr 1 kann in dieser Lage in die Vorpalettierung 8 eingelegt werden. Dies zeigen die Figur 9 und 10, wobei zunächst die Kipphebel 5 in waagrechte Position gebracht werden. Die Figuren 11 und 12 zeigen die Schwenkbewegung der Auflagerinne 7 und wie hierbei das Muffenrohr 1 in die Kipphebel 5 einrollt.

Figuren 13 und 14 zeigen die senkrechte Abwärtsbewegung der Hebe- und Schwenkeinheit 6 mit den Kipphebeln 5 und wie hierbei das Muffenrohr 1 in die Auffangarme 9 abgelegt wird.

Wie bereits beschrieben haben diese Auffangarme 9 der Vorpalettierung 8 eine leicht geneigte Stellung, so daß das Muffenrohr 1 bis hin zu den Schwenkhebeln 11, die als Anschlag dienen und hierbei noch senkrecht stehen , rollt.

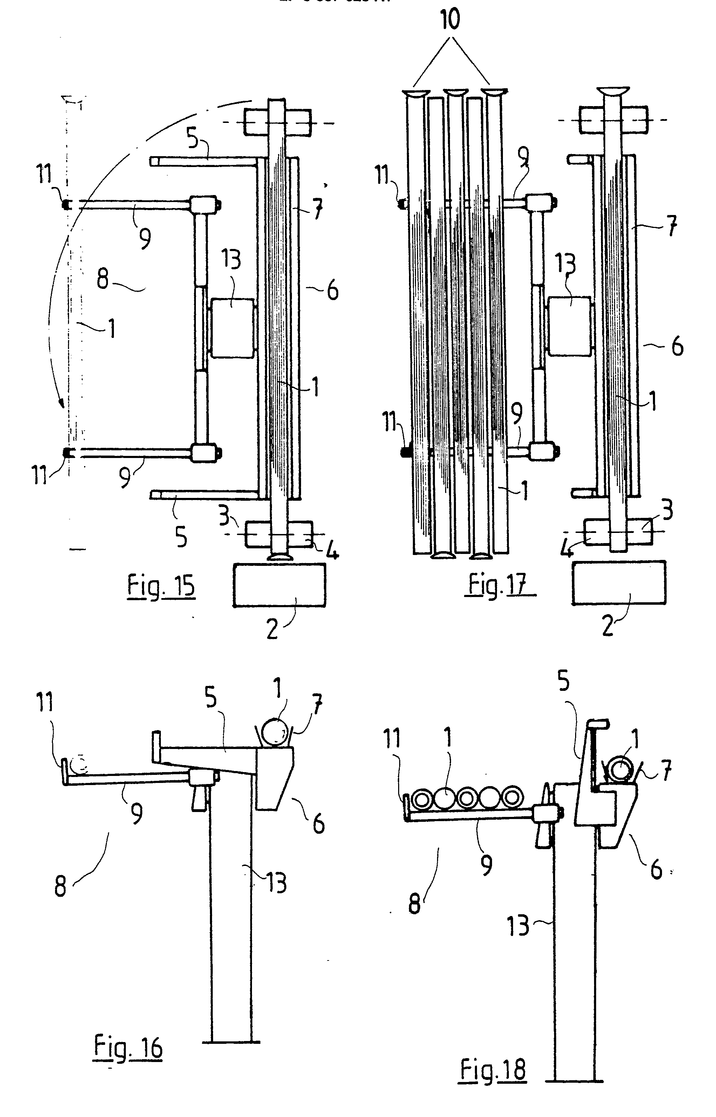

Das nächste Palettiergut wird nun, wie zuvor beschrieben, in die Auflagerinne befördert und senkrecht nach oben gebracht.
Nun erfolgt, wie in den Figuren 15 und 16 gezeigt, die Schwenkbewegung der Hebe- und Schwenkeinheit 6, wobei die Auflagerinne 7 und das Muffenrohr 1 um 180° gedreht werden. Nachdem der Ablagevorgang in die Vorpalettierung erfolgt ist, liegt das zweite Muffenrohr gegensinnig zum ersten Muffenrohr auf der Vorpalettierung.

Diese Verfahrensschritte wiederholen sich, bis die Vorpalettierung 8 eine komplette Stapellage 10 aufweist.

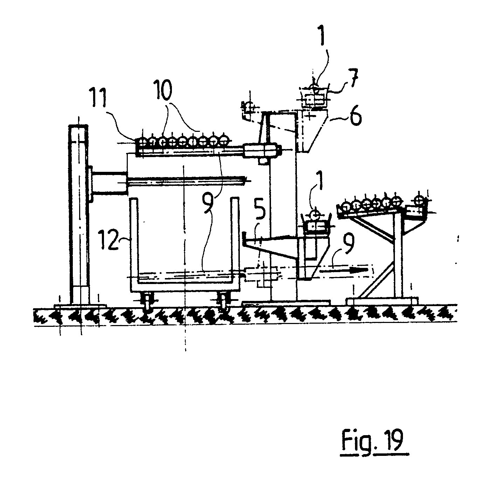

Dies ist in Figur 17 und 18 dargestellt. Danach fährt die Vorpalettiereinheit 8 senkrecht ab und die Auffangarme 9 werden eingezogen. Zuvor werden die Schwenkhebel 11 in eine waagrechte Position gebracht. Somit, dies ist aus der Figur 19 erkennbar, wird die komplette Stapellage 10 in die Endpalette 12 eingelegt.

Nun erfolgt die Wiederholung der bereits beschriebenen Arbeitsschritte.

Mit der vorliegenden Erfindung wird ein Verfahren und eine Vorrichtung bereitgestellt, das es ermöglicht, Muffenrohre und gleichartige Erzeugnisse, die eine gegensinnige Palettierung erfordern automatisch und maschinell zu palettieren. Zur Steuerung des Verfahrensablaufs wird ein eigens hierfür entwickeltes Programm über einen Rechner aktiviert. Die Arbeitsbewegungen der einzelnen Elemente werden durch pneumatische und/oder hydraulische und/oder elektrische Steuereinheiten durchgeführt.

**Ansprüche**

1. Verfahren zum Palettieren von Muffenrohren, Flanschrohren und gleichartigen Erzeugnissen , die eine gegensinnig angeordnete Palettierung erfordern,
dadurch gekennzeichnet,
daß das Palettiergut (1) einzeln aus einer Fertigungseinheit (2) in eine Empfangseinheit (3) übernommen wird, einer Hebe- und Schwenkeinheit (6) zugeführt wird, die das einzelne Palettiergut (1), wechselweise um 180° gewendet, einer Vorpalettierung (8) übergibt und nach der Palettierung einer Stapellage (10), dieser einer Endpalette (12) zuführt.

2. Verfahren zum Palettieren nach Anspruch 1, dadurch gekennzeichnet,
daß die Empfangseinheit (3) zur Aufnahme des Palettiergutes (1) aus der Fertigungseinheit (2) mindestens eine Förderrolle (4) und eine an sich bekannte Endlagenerkennung (15) für das Palettiergut (1) aufweist.

3. Verfahren zum Palettieren nach Anspruch 1 - 2,
dadurch gekennzeichnet,
daß das Palettiergut (1) von den Förderrollen (4) in die Auflagerinne (7) der Hebe- und Schwenkeinheit (6) zugeführt wird.

4. Verfahren zum Palettieren nach Anspruch 1 - 3,
dadurch gekennzeichnet,
daß die Hebe- und Schwenkeinheit (6) mit Kipphebeln (5) senkrecht nach oben fahren, wonach die Kipphebel (5) eine waagrechte Stellung einnehmen und die Auflagerinne (7) derart geschwenkt wird, daß das Palettiergut (1) in die Kipphebel (5) fallen.

5. Verfahren zum Palettieren nach Anspruch 1- 4,
dadurch gekennzeichnet,
daß die Hebe- und Schwenkeinheit (6) mit den Kipphebeln (5) senkrecht abfährt und dabei das Palettiergut (1) in die leicht geneigten Auffangarme (9) der Vorpalettierung ablegen, danach die Kipphebel (5) in senkrechte Position gestellt werden, wonach das nächste, aus der Fertigungseinheit (2) über die Empfangseinheit (3) zugeführte Palettiergut (1) in die Auflagerinne (7) übernommen wird, hiernach die Hebe- und Schwenkeinheit (6) mit Kipphebel (5) senkrecht nach oben fährt und die Hebe- und Schwenkeinheit (6) eine, entsprechend dem jeweiligen Palettierschemaprogramm, um 180° betragende Schwenkbewegung vornimmt, das Palettiergut (1) durch Schwenken der Auflagerinne (7) in die Kipphebel (5) fallen und die Hebe- und Schwenkeinheit (6) mit den Kipphebeln (5) senkrecht abfährt und dabei das Palettiergut in die leicht geneigten Auffangarme (9) der Vorpalettierung ablegt, und das nächste Palettiergut (1) aufnimmt.

6. Verfahren zur Palettierung nach Anspruch 1 - 5,
dadurch gekennzeichnet,
daß, nachdem die Palettierung einer kompletten Stapellage (10) erfolgt ist, die Vorpalettiereinheit (8) senkrecht abfährt, die an den Auffangarmen (9) angeordneten Schwenkhebel (11) in eine waagrechte Position gestellt, die Auffangarme (8) horizontal eingezogen werden und die Stapellage (10) in die Endpalette (12) eingelegt wird.

7. Vorrichtung zur Durchführung des Verfahrens nach Anspruch 1 - 6,
dadurch gekennzeichnet,
daß die Vorrichtung aus einer Empfangseinheit (3), einer an einer Maschinensäule (13) senkrecht verfahrbar angeordneten Hebe- und Schwenkeinheit (6) mit Kipphebel (5),einer an der Maschinensäule (13) senkrecht verfahrbar angeordneten Vorpalettiereinheit (8) und pneumatischen und/oder hydraulischen und/oder elektrischen Steuereinheiten (14) besteht.

8. Vorrichtung nach Anspruch 7,
dadurch gekennzeichnet,
daß die Empfangseinheit (3) mindestens eine Förderrolle (4) aufweist.

9. Vorrichtung nach Anspruch 7 - 8,
dadurch gekennzeichnet,
daß die Hebe- und Schwenkeinheit (6) eine vertikal klappbar angeordnete Auflagerinne (7), die in der Hebe- und Schwenkeinheit (6) horizontal drehbar gelagert ist, sowie zwei schwenkbar gelagerte und senkrecht an der Maschinensäule (13) verfahrbare Kipphebel (5) aufweist.

10. Vorrichtung nach Anspruch 7 - 9,
dadurch gekennzeichnet,
daß die Vorpalettiereinheit (8) an der Maschinensäule (13) senkrecht verfahrbar angeordnet ist, und horizontal verfahrbare, mit stirnseitig angeordneten Schwenkhebeln (11) versehene Auffangarme (9) aufweist.

Fig.1

Fig.2

Fig.3

Fig.5

Fig.4

Fig.6

Fig.7

Fig.9

Fig.8

Fig.10

Fig.11

Fig.12

Fig.13

Fig.14

Fig. 15

Fig. 16

Fig. 17

Fig. 18

Fig. 19

Europäisches
Patentamt

**EUROPÄISCHER RECHERCHENBERICHT**

Nummer der Anmeldung

EP 88 11 4727

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 907 512 (DIMTER GmbH) <br> * Das ganze Dokument * <br> --- | 1,2,3,6 ,7,8 | B 65 G 57/081 <br> B 65 G 57/18 |
| Y | EP-A-0 092 093 (PONT-A-MOUSSON) <br> * Seite 5, Zeile 6 - Seite 7, Zeile 36; Figuren * <br> --- | 1,2,3,6 ,7,8 | |
| A | EP-A-0 080 063 (PONT-A-MOUSSON) <br> * Figuren * <br> ----- | 1 | |

**RECHERCHIERTE SACHGEBIETE (Int. Cl.4)**

B 65 G
B 65 B
B 21 D
B 21 B

Der vorliegende Recherchenbericht wurde für alle Patentansprüche erstellt

| Recherchenort | Abschlußdatum der Recherche | Prüfer |
|---|---|---|
| DEN HAAG | 13-04-1989 | OSTYN T.J.M. |

EPO FORM 1503 03.82 (P0403)